# EUROPEAN PATENT APPLICATION

(11) **EP 2 947 924 A1**
(43) Date of publication of application: **25.11.2015**
(21) Application number: 13873859.6
(22) Date of filing: 31.01.2013
(51) Int. Cl.: H04W 48/18

(54) **ACCESS PROCESSING METHOD, DEVICE, AND SYSTEM**

(71) Applicant: Huawei Technologies Co., Ltd., Longgang District Shenzhen, Guangdong 518129 (CN)
(72) Inventor: ZHAO, Lijie, Shenzhen Guangdong 518129 (CN); LIU, Weihua, Shenzhen Guangdong 518129 (CN); KONG, Tao, Shenzhen Guangdong 518129 (CN); WU, Juntao, Shenzhen Guangdong 518129 (CN)
(74) Representative: Körber, Martin Hans
(86) International application number: PCT/CN2013/071219
(87) International publication number: WO 2014/117370

(57) **Abstract**

Embodiments of the present invention provide an access processing method, an apparatus, and a system, where the method includes: generating, by a capability enabling gateway, a RAT selection policy according to context information of a UE, and sending a RAT selection request that includes the RAT selection policy to an inter-RAT coordination controller corresponding to a cell in which the UE is located, so that the inter-RAT coordination controller determines an access standard of the UE according to the RAT selection policy. In this way, network utilization is improved, and service quality can be ensured and improved for an end user.

## Description

### TECHNICAL FIELD

Embodiments of the present invention relate to the field of communications technologies, and in particular, to an access processing method, an apparatus, and a system.

### BACKGROUND

With development of mobile communications technologies, a situation emerges in which the following three radio access standards coexist: Global System for Mobile Communications (global system for mobile communications, GSM for short), Universal Mobile Telecommunications System (Universal Mobile Telecommunications System, UMTS for short), and Long Term Evolution (Long Term Evolution, LTE for short). To better coordinate radio resources of the foregoing three standards, an inter-RAT coordination controller emerges. The inter-RAT coordination controller may implement unified scheduling on the radio resources of the three standards of GSM, UMTS, and LTE. A specific implementation process of the scheduling may be: after receiving, by using a common interface, network information of various radio standards that is sent by a base station controller (Base Station Controller, BSC for short), a radio network controller (Radio Network Controller, RNC for short), and an evolved NodeB (Evolved Node B, eNodeB for short), the inter-RAT coordination controller performs comprehensive scheduling according to frequency spectrum information, terminal capability information, real-time load information, real-time interference information, and the like, so as to implement unified admission, load balancing, and handovers of the three standards.

In the prior art, when the inter-RAT coordination controller performs unified scheduling for user equipments (User Equipment, UE for short), service quality of some data services may be reduced and network utilization is low.

### SUMMARY

Embodiments of the present invention provide an access processing method, an apparatus, and a system, so as to implement that service quality is ensured when a service handover is performed.

According to a first aspect, an embodiment of the present invention provides an access processing method, including:
generating a radio access technology RAT selection policy according to context information of a user equipment UE, where the context information includes information related to a service type and/or information related to a user type; and
sending a RAT selection request that includes the RAT selection policy to an inter-RAT coordination controller corresponding to a cell in which the UE is located, so that the inter-RAT coordination controller determines an access standard of the UE according to the RAT selection policy.

In a first possible implementation manner of the first aspect, before the generating a RAT selection policy according to context information of a UE, the method further includes:
receiving a service assurance request message sent by a service server, where the service assurance request message includes quality of service QoS requirement information, and the QoS requirement information is corresponding to a service type provided by the service server, where
the generating a RAT selection policy according to context information of a UE includes:
   generating a RAT selection policy that includes the QoS requirement information, a temporary identifier of the UE, a current RAT type of the UE, and a preferred RAT type.

With reference to the first possible implementation manner of the first aspect, in a second possible implementation manner of the first aspect, after the sending a RAT selection request that includes the RAT selection policy to an inter-RAT coordination controller corresponding to a cell in which the UE is located, the method further includes:
receiving a RAT handover success message sent by the inter-RAT coordination controller; and
sending the QoS requirement information to a policy and charging rules function PCRF.

With reference to the second possible implementation manner of the first aspect, in a third possible implementation manner of the first aspect, after the sending the QoS requirement information to the PCRF, the method further includes:
receiving RAT monitoring information periodically sent by the inter-RAT coordination controller, and invoking, according to the RAT monitoring information, a charging network element to perform charging processing.

With reference to the first aspect, in a fourth possible implementation manner of the first aspect, before the generating a RAT selection policy according to context information of a UE, the method further includes:
receiving an access standard adjustment policy sent by an operator server, where the access standard adjustment policy is determined according to the service type and/or the user type, where
the generating a RAT selection policy according to context information of a UE includes:
   determining a to-be-adjusted UE according to the access standard adjustment policy; and
   generating a RAT selection policy that includes a temporary identifier of the UE, a current RAT type of the UE, and a preferred RAT type.

With reference to the fourth possible implementation manner of the first aspect, in a fifth possible implementation manner of the first aspect, the determining a to-be-adjusted UE according to the access standard adjustment policy includes:
interacting with a network element in a core network according to the access standard adjustment policy to determine the to-be-adjusted UE.

With reference to the method according to any one of the first aspect to the fifth possible implementation manner of the first aspect, in a sixth possible implementation manner of the first aspect, before the generating a RAT selection policy according to context information of a UE, the method further includes:
interacting with a core network management device to determine the cell in which the UE is located; and
determining the corresponding inter-RAT coordination controller according to information about the cell.

According to a second aspect, an embodiment of the present invention provides an access processing method, including:
receiving a RAT selection request that includes a radio access technology RAT selection policy and is sent by a capability enabling gateway, where the RAT selection policy is generated by the capability enabling gateway according to context information of a user equipment UE, and the context information includes information related to a service type and/or information related to a user type; and
determining an access standard of the user equipment UE according to the RAT selection policy.

In a first possible implementation manner of the second aspect, the RAT selection policy includes QoS requirement information, a temporary identifier of the UE, a current RAT type of the UE, and a preferred RAT type; and
the determining an access standard of the user equipment UE according to the RAT selection policy includes:
if the current RAT type of the UE does not comply with the QoS requirement information, performing a RAT handover according to the preferred RAT type.

With reference to the first possible implementation manner of the second aspect, in a second possible implementation manner of the second aspect, after the performing a RAT handover according to the preferred RAT type, the method further includes:
sending a RAT handover success message to the capability enabling gateway, so that the capability enabling gateway sends the QoS requirement information to a policy and charging rules function PCRF.

With reference to the second possible implementation manner of the second aspect, in a third possible implementation manner of the second aspect, after the sending a RAT handover success message to the capability enabling gateway, the method further includes:
periodically sending RAT monitoring information to the capability enabling gateway, so that the capability enabling gateway invokes, according to the RAT monitoring information, a charging network element to perform charging processing.

With reference to the second aspect, in a fourth possible implementation manner of the second aspect, the RAT selection policy includes a temporary identifier of the UE, a current RAT type of the UE, and a preferred RAT type; and
the determining an access standard of the user equipment UE according to the RAT selection policy includes:
if the current RAT type of the UE is not included in the preferred RAT type, performing a RAT handover according to the preferred RAT type.

According to a third aspect, an embodiment of the present invention provides a capability enabling gateway, including:
a generating module, configured to generate a radio access technology RAT selection policy according to context information of a user equipment UE, where the context information includes information related to a service type and/or information related to a user type; and
a sending module, configured to send a RAT selection request that includes the RAT selection policy generated by the generating module to an inter-RAT coordination controller corresponding to a cell in which the UE is located, so that the inter-RAT coordination controller determines an access standard of the UE according to the RAT selection policy.

In a first possible implementation manner of the third aspect, the capability enabling gateway further includes:
a receiving module, configured to: before the generating module generates the RAT selection policy according to the context information of the UE, receive a service assurance request message sent by a service server, where the service assurance request message includes quality of service QoS requirement information, and the QoS requirement information is corresponding to a service type provided by the service server, where
the generating module is specifically configured to generate a RAT selection policy that includes the QoS requirement information, a temporary identifier of the UE, a current RAT type of the UE, and a preferred RAT type.

With reference to the first possible implementation manner of the third aspect, in a second possible implementation manner of the third aspect, the receiving module is further configured to:
receive a RAT handover success message sent by the inter-RAT coordination controller after the sending module sends the RAT selection request that includes the RAT selection policy to the inter-RAT coordination controller corresponding to the cell in which the UE is located, where
the sending module is further configured to send the QoS requirement information to a policy and charging rules function PCRF.

With reference to the second possible implementation manner of the third aspect, in a third possible implementation manner of the third aspect, the receiving module is further configured to:
after the sending module sends the QoS requirement information to the PCRF, receive RAT monitoring information periodically sent by the inter-RAT coordination controller and invoke, according to the RAT monitoring information, a charging network element to perform charging processing.

With reference to the third aspect, in a fourth possible implementation manner of the third aspect, the receiving module is configured to: before the generating module generates the RAT selection policy according to the context information of the UE, receive an access standard adjustment policy sent by an operator server, where the access standard adjustment policy is determined according to the service type and/or the user type; and
the generating module includes:
a determining unit, configured to determine a to-be-adjusted UE according to the access standard adjustment policy; and
a generating unit, configured to generate a RAT selection policy that includes a temporary identifier of the UE, a current RAT type of the UE, and a preferred RAT type.

With reference to the fourth possible implementation manner of the third aspect, in a fifth possible implementation manner of the third aspect, the determining unit is specifically configured to:
interact with a network element in a core network according to the access standard adjustment policy to determine the to-be-adjusted UE.

With reference to the method according to any one of the third aspect to the fifth possible implementation manner of the third aspect, in a sixth possible implementation manner of the third aspect, the capability enabling gateway further includes:
a determining module, configured to: before the generating module generates the RAT selection policy according to the context information of the UE, interact with a core network management device to determine the cell in which the UE is located; and
determine the corresponding inter-RAT coordination controller according to information about the cell.

According to a fourth aspect, an embodiment of the present invention provides an access processing method, including:
a receiving module, configured to receive a RAT selection request that includes a radio access technology RAT selection policy and is sent by a capability enabling gateway, where the RAT selection policy is generated by the capability enabling gateway according to context information of a user equipment UE, and the context information includes information related to a service type and/or information related to a user type; and
a processing module, configured to determine an access standard of the user equipment UE according to the RAT selection policy received by the receiving module.

In a first possible implementation manner of the fourth aspect, the RAT selection policy includes QoS requirement information, a temporary identifier of the UE, a current RAT type of the UE, and a preferred RAT type; and
the processing module is specifically configured to:
if the current RAT type of the UE does not comply with the QoS requirement information, perform a RAT handover according to the preferred RAT type.

With reference to the first possible implementation manner of the fourth aspect, in a second possible implementation manner of the fourth aspect, the inter-RAT coordination controller further includes:
a sending module, configured to: after the processing module performs the RAT handover according to the preferred RAT type, send a RAT handover success message to the capability enabling gateway, so that the capability enabling gateway sends the QoS requirement information to a policy and charging rules function PCRF.

With reference to the second possible implementation manner of the fourth aspect, in a third possible implementation manner of the fourth aspect, the sending module is further configured to:
after the sending the RAT handover success message to the capability enabling gateway, periodically send RAT monitoring information to the capability enabling gateway, so that the capability enabling gateway invokes, according to the RAT monitoring information, a charging network element to perform charging processing.

With reference to the fourth aspect, in a fourth possible implementation manner of the fourth aspect, the RAT selection policy includes a temporary identifier of the UE, a current RAT type of the UE, and a preferred RAT type; and
the processing module is specifically configured to:
if the current RAT type of the UE is not included in the preferred RAT type, perform a RAT handover according to the preferred RAT type.

According to a fifth aspect, an embodiment of the present invention provides a communications system, including the capability enabling gateway according to any one of the third aspect to the sixth possible implementation manner of the third aspect, and at least one inter-RAT coordination controller according to any one of the fourth aspect to the fourth possible implementation manner of the fourth aspect.

According to a sixth aspect, an embodiment of the present invention provides a capability enabling gateway, including:
a processor, configured to generate a radio access technology RAT selection policy according to context information of a user equipment UE, where the context information includes information related to a service type and/or information related to a user type; and
a sender, configured to send a RAT selection request that includes the RAT selection policy generated by the processor to an inter-RAT coordination controller corresponding to a cell in which the UE is located, so that the inter-RAT coordination controller determines an access standard of the UE according to the RAT selection policy.

According to a seventh aspect, an embodiment of the present invention provides an inter-RAT coordination controller, including:
a receiver, configured to receive a RAT selection request that includes a radio access technology RAT selection policy and is sent by a capability enabling gateway, where the RAT selection policy is generated by the capability enabling gateway according to context information of a user equipment UE, and the context information includes information related to a service type and/or information related to a user type; and
a processor, configured to determine an access standard of the user equipment UE according to the RAT selection policy received by the receiver.

According to an eighth aspect, an embodiment of the present invention provides a communications system, including the capability enabling gateway according to the sixth aspect, and the inter-RAT coordination controller according to the seventh aspect.

According to the access processing method provided in the embodiments of the present invention, after a capability enabling gateway generates a RAT selection policy according to context information of a UE, where the context information includes information related to a service type and/or information related to a user type, a RAT selection request that includes the RAT selection policy is sent to an inter-RAT coordination controller corresponding to a cell in which the UE is located, so that the inter-RAT coordination controller determines an access standard of the UE according to the RAT selection policy; and the capability enabling gateway may control the inter-RAT coordination controller corresponding to the cell in which the UE is located to schedule, according to the service type and/or the user type, the UE to access a network of the corresponding standard. In this way, network utilization is improved, and service quality can be ensured and improved for an end user.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of Embodiment 1 of an access processing method according to the present invention;
FIG. 2 is a flowchart of Embodiment 2 of an access processing method according to the present invention;
FIG. 3 is a flowchart of Embodiment 3 of an access processing method according to the present invention;
FIG. 4 is a flowchart of Embodiment 4 of an access processing method according to the present invention;
FIG. 5 is a flowchart of Embodiment 5 of an access processing method according to the present invention;
FIG. 6 is a flowchart of Embodiment 7 of an access processing method according to the present invention;
FIG. 7 is a flowchart of Embodiment 8 of an access processing method according to the present invention;
FIG. 8 is a schematic structural diagram of Embodiment 1 of a capability enabling gateway according to the present invention;
FIG. 9 is a schematic structural diagram of Embodiment 2 of a capability enabling gateway according to the present invention;
FIG. 10 is a schematic structural diagram of Embodiment 3 of a capability enabling gateway according to the present invention;
FIG. 11 is a schematic structural diagram of Embodiment 4 of a capability enabling gateway according to the present invention;
FIG. 12 is a schematic structural diagram of Embodiment 1 of an inter-RAT coordination controller according to the present invention;
FIG. 13 is a schematic structural diagram of Embodiment 2 of an inter-RAT coordination controller according to the present invention;
FIG. 14 is a schematic structural diagram of Embodiment 5 of a capability enabling gateway according to the present invention; and
FIG. 15 is a schematic structural diagram of Embodiment 3 of an inter-RAT coordination controller according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

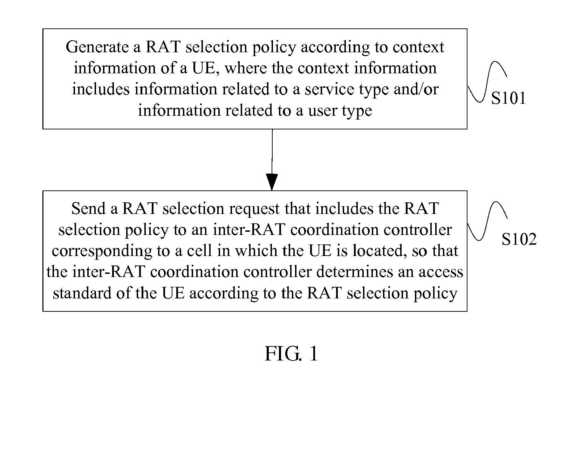

FIG. 1 is a flowchart of Embodiment 1 of an access processing method according to the present invention. This embodiment is described by using an example in which a capability enabling gateway serves as an execution body. As shown in FIG. 1, the method in this embodiment may include:

S101. Generate a radio access technology (Radio Access Technology, RAT for short) selection policy according to context information of a UE, where the context information includes information related to a service type and/or information related to a user type.

Specifically, the capability enabling gateway generates the RAT selection policy according to the context information of the UE, where the context information includes the information related to the service type and/or the information related to the user type. The service type herein includes, for example, the following services: an instant messaging (IM) type, a Voice over Internet Protocol (VOIP) type, a streaming media and high-definition video (Streaming) type, a social networking service (SNS) type, a web page browsing (Web) type, a cloud computing and online cloud application (Cloud) type, an email service (Email) type, and a mobile game (Game) type; the user type includes, for example, the following services: a roaming user (that is, a user to whom a number is allocated by another operator and who roams to a local network to use a resource of the local network), a FUP user (that is, a user for whom uplink and downlink rates are limited because a usage amount of a data package is exceeded each month), a machine-to-machine (M2M) user, and a high-signaling user (that is, a user who severely consumes a signaling resource because of a sharp signaling increase due to an application or system exception). However, the present invention is not limited thereto.

S102. Send a RAT selection request that includes the RAT selection policy to an inter-RAT coordination controller corresponding to a cell in which the UE is located, so that the inter-RAT coordination controller determines an access standard of the UE according to the RAT selection policy.

Specifically, after generating the RAT selection policy, the capability enabling gateway sends the RAT selection request that includes the RAT selection policy to the inter-RAT coordination controller corresponding to the cell in which the UE is located; after receiving the RAT selection request, the inter-RAT coordination controller determines the access standard of the UE according to the RAT selection policy carried in the RAT selection request.

According to the access processing method provided in this embodiment, after a capability enabling gateway generates a RAT selection policy according to context information of a UE, where the context information includes information related to a service type and/or information related to a user type, a RAT selection request that includes the RAT selection policy is sent to an inter-RAT coordination controller corresponding to a cell in which the UE is located, so that the inter-RAT coordination controller determines an access standard of the UE according to the RAT selection policy. It is implemented that the capability enabling gateway may control the inter-RAT coordination controller corresponding to the cell in which the UE is located to schedule, according to the service type and/or the user type, the UE to access a network of the corresponding standard. In this way, network utilization is improved, and service quality can be ensured and improved for an end user.

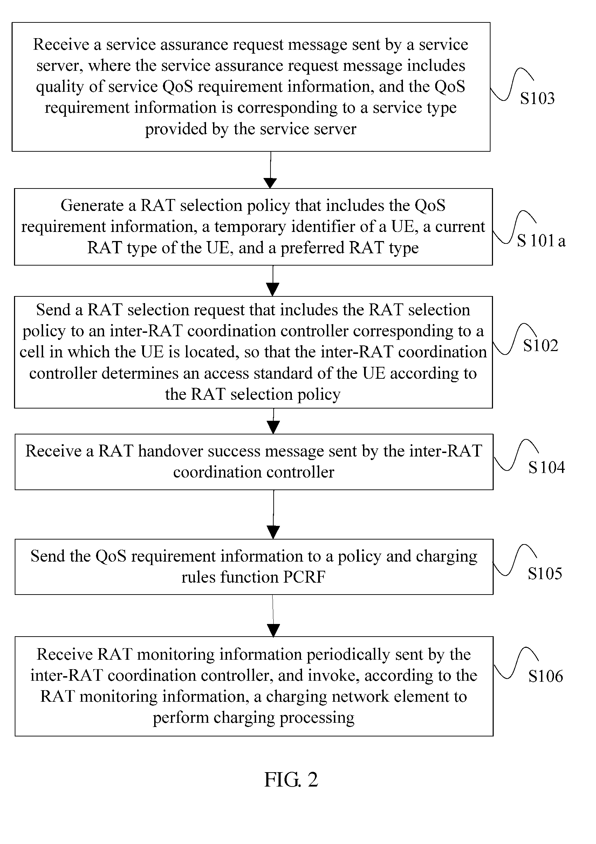

FIG. 2 is a flowchart of Embodiment 2 of an access processing method according to the present invention. This embodiment is based on the method shown in FIG. 1. As shown in FIG. 2, before step S101, the method in this embodiment may further include:

S103. Receive a service assurance request message sent by a service server, where the service assurance request message includes quality of service QoS requirement information, and the QoS requirement information is corresponding to a service type provided by the service server.

Specifically, the capability enabling gateway receives the service assurance request message sent by the service server, where the service assurance request message includes the quality of service QoS requirement information, and the QoS requirement information is corresponding to the service type provided by the service server. The service server is, for example, an application and content server corresponding to an Internet content provider. After a user logs in to the application and content server by using a terminal and starts a specific service, if the application and content server finds, by using a login account of the user, that the user is, for example, a VIP user, a paid user, or a user of a specific service type, authentication and addressing (namely, finding a corresponding capability enabling gateway) are completed by using a capability enabling platform of an operator, and then a service assurance request message that includes quality of service QoS requirement information is sent to the capability enabling gateway, where the service assurance request message further includes an IP address of the user. If the IP address of the user is a private network IP address, the capability enabling gateway converts, by means of Network Address Translation (NAT), the private network IP address into an internal network IP address, and then sends the IP address of the user or the converted internal network IP address to a gateway GPRS support node (Gateway GPRS Support Node, GGSN for short) corresponding to the GSM and UMTS standards, or to a serving gateway (Serving Gateway, S-GW for short)/PDN gateway (PDN gateway, P-GW for short) corresponding to the LTE standard. The corresponding GGSN/S-GW/P-GW returns context information of the user, where the context information of the user includes a card number (IMSI) of a SIM card, a mobile phone number (MSISDN), an identifier (ID) of a mobility management entity (Mobility Management Entity, MME for short) network element/GPRS serving node (Serving GPRS SUPPORT NODE, SGSN for short) network element, and a subscription type. Finally, the capability enabling gateway sends IMSI information of the user to the SGSN/MME; the SGSN/MME returns cell information and a temporary identifier of the UE that are corresponding to the IMSI; and the capability enabling gateway finds a corresponding inter-RAT coordination controller according to information about a cell with which the inter-RAT coordination controller is previously registered.

Step S101 is specifically as follows:

S101a. Generate a RAT selection policy that includes the QoS requirement information, a temporary identifier of the UE, a current RAT type of the UE, and a preferred RAT type.

The current RAT type of the UE includes an identifier (ID) of a base station of a corresponding standard, for example, an eNode ID, a Cell ID, an RNC ID, and a RAI. The preferred RAT type may be a preferred RAT list.

After step S102, the method further includes:

S104. Receive a RAT handover success message sent by the inter-RAT coordination controller.

After the capability enabling gateway sends the RAT selection request that includes the RAT selection policy to the inter-RAT coordination controller corresponding to the cell in which the UE is located in S102, that the inter-RAT coordination controller determines an access standard of the UE according to the RAT selection policy includes:

The inter-RAT coordination controller assesses whether a current standard can comply with a QoS parameter in the QoS requirement information, and: (1) if the requirement is met, retains the current access standard of the UE and returns a RAT identifier;
(2) if the requirement is not met, selects a RAT that meets the requirement, performs a RAT handover, and sends a RAT handover success message to the capability enabling gateway;
(3) if networks of all RAT standards do not meet the requirement, sends, to the capability enabling gateway, an identifier of a RAT that has the highest QoS capability among all the RAT standards, where the capability enabling gateway negotiates with the service server, and the service server determines whether to lower a Qos requirement, and whether to resend or stop sending the service assurance request message.

After the foregoing first two cases are implemented, step S105 is performed.

S105. Send the QoS requirement information to a policy and charging rules function (Policy and Charging Rules Function, PCRF for short).

For the first case, the PCRF directly triggers an update of a bearer/the Packet Data Protocol (packet data protocol, PDP for short); for the second case, the UE is handed over to a corresponding RAT, the Qos requirement information is acquired from the PCRF according to a 3GPP standard process, and the update of the bearer/PDP is performed.

After S105, the method further includes:

S106. Receive RAT monitoring information periodically sent by the inter-RAT coordination controller, and invoke, according to the RAT monitoring information, a charging network element to perform charging processing.

According to the access processing method provided in this embodiment, a capability enabling gateway receives a service assurance request message sent by a service server, where the service assurance request message includes quality of service QoS requirement information, and the QoS requirement information is corresponding to a service type provided by the service server; and after a RAT selection policy is generated according to context information of a UE, where the RAT selection policy includes the QoS requirement information, a temporary identifier of the UE, a current RAT type of the UE, and a preferred RAT type, a RAT selection request that includes the RAT selection policy is sent to an inter-RAT coordination controller corresponding to a cell in which the UE is located, so that the inter-RAT coordination controller determines an access standard of the UE according to the RAT selection policy. The capability enabling gateway may control the inter-RAT coordination controller corresponding to the cell in which the UE is located to schedule, according to the service type corresponding to the QoS requirement information, the UE to access a network of the corresponding standard. In this way, network utilization is improved, and service quality can be ensured and improved for an end user.

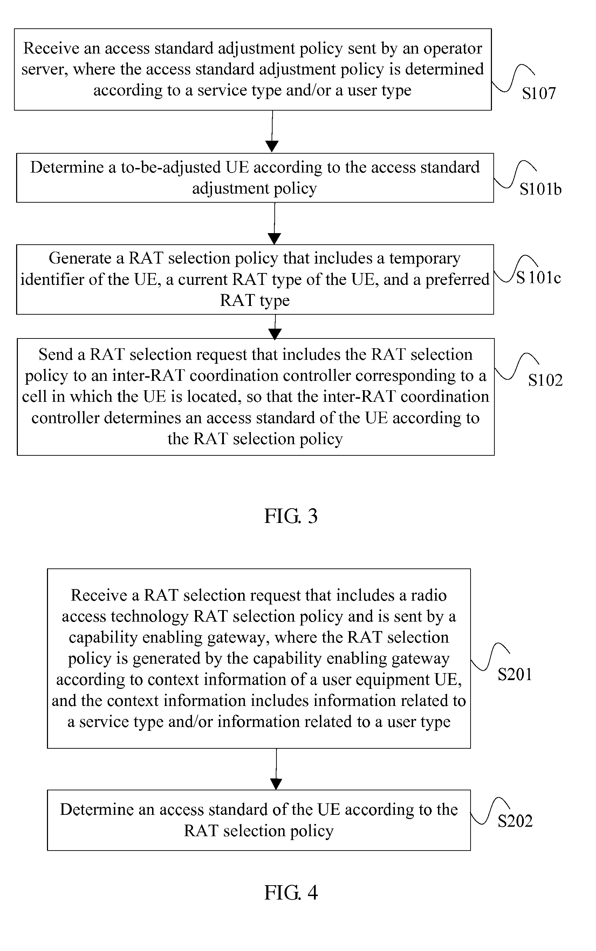

FIG. 3 is a flowchart of Embodiment 3 of an access processing method according to the present invention. This embodiment is based on the method shown in FIG. 1. As shown in FIG. 3, before step S101, the method in this embodiment may further include:

S107. Receive an access standard adjustment policy sent by an operator server, where the access standard adjustment policy is determined according to the service type and/or the user type.

The access standard adjustment policy may be a network selection policy defined by an operator, and the access standard adjustment policy is, for example, that a roaming user is carried on UMTS, a FUP user is carried on GSM, or a high-definition video service is carried on LTE.

Step S101 is specifically as follows:

S101b. Determine a to-be-adjusted UE according to the access standard adjustment policy.

Specifically, the capability enabling gateway interacts with a network element in a core network according to the access standard adjustment policy to determine the to-be-adjusted UE. For example:
(1) when the access standard adjustment policy is, for example, that a roaming user is carried on UMTS, the capability enabling gateway subscribes to roaming user information with the SGSN/MME, that is, when a roaming user uses a network, the SGSN/MME reports, to the capability enabling gateway, cell information corresponding to the user and a temporary identifier of the UE;
(2) when the access standard adjustment policy is, for example, that a FUP user is carried on GSM, the capability enabling gateway subscribes to a FUP user with the PCRF, that is, when finding a condition of the FUP user is met, the PCRF reports IMSI information of the user to the capability enabling gateway, and the capability enabling gateway acquires cell information and a temporary identifier of the UE from the SGSN/MME;
(3) when the access standard adjustment policy is, for example, that a high-definition video service is carried on LTE, the GGSN/S-GW/P-GW actively reports a user type and a service type, and the capability enabling gateway matches the service type with the access standard adjustment policy, for example, the capability enabling gateway matches the high-definition video service with an LTE-preferred policy; and the capability enabling gateway acquires cell information and a temporary identifier of a UE from the SGSN/MME.

S101c. Generate a RAT selection policy that includes a temporary identifier of the UE, a current RAT type of the UE, and a preferred RAT type.

In the foregoing three embodiments, before the RAT selection policy is generated according to the context information of the UE in step S101, the method further includes:

The capability enabling gateway interacts with a core network management device to determine a cell in which the UE is located, and then determines a corresponding inter-RAT coordination controller according to information about the cell.

According to the access processing method provided in this embodiment, a capability enabling gateway receives an access standard adjustment policy sent by an operator server, where the access standard adjustment policy is determined according to a service type and/or a user type; then, a to-be-adjusted UE is determined according to the access standard adjustment policy, and a RAT selection policy that includes a temporary identifier of the UE, a current RAT type of the UE, and a preferred RAT type is generated; and a RAT selection request that includes the RAT selection policy is sent to an inter-RAT coordination controller corresponding to a cell in which the UE is located, so that the inter-RAT coordination controller determines an access standard of the UE according to the RAT selection policy. The capability enabling gateway may control the inter-RAT coordination controller corresponding to the cell in which the UE is located to schedule, according to the access standard adjustment policy defined by an operator, the UE to access a network of the corresponding standard. In this way, network utilization is improved, and service quality can be ensured and improved for an end user.

FIG. 4 is a flowchart of Embodiment 4 of an access processing method according to the present invention. This embodiment is described by using an example in which an inter-RAT coordination controller serves as an execution body. As shown in FIG. 1, the method in this embodiment may include:

S201. Receive a RAT selection request that includes a radio access technology RAT selection policy and is sent by a capability enabling gateway, where the RAT selection policy is generated by the capability enabling gateway according to context information of a user equipment UE, and the context information includes information related to a service type and/or information related to a user type.

S202. Determine an access standard of the UE according to the RAT selection policy.

That the inter-RAT coordination controller determines an access standard of the UE according to the RAT selection policy includes:

The inter-RAT coordination controller assesses whether a current standard can comply with a QoS parameter in QoS requirement information, and: (1) if the requirement is met, retains the current access standard of the UE and returns a RAT identifier;
(2) if the requirement is not met, selects a RAT that meets the requirement, performs a RAT handover, and sends a RAT handover success message to the capability enabling gateway;
(3) if networks of all RAT standards do not meet the requirement, sends, to the capability enabling gateway, an identifier of a RAT that has the highest QoS capability among all the RAT standards, where the capability enabling gateway negotiates with the service server, and the service server determines whether to lower a Qos requirement, and whether to resend or stop sending the service assurance request message.

According to the access processing method provided in this embodiment, an inter-RAT coordination controller receives a RAT selection request that includes a radio access technology RAT selection policy and is sent by a capability enabling gateway, where the RAT selection policy is generated by the capability enabling gateway according to context information of a user equipment UE, and the context information includes information related to a service type and/or information related to a user type; and then an access standard of the UE is determined according to the RAT selection policy. It is implemented that the inter-RAT coordination controller may schedule, under control of the capability enabling gateway and according to the service type and/or the user type, the UE to access a network of the corresponding standard. In this way, network utilization is improved, and service quality can be ensured and improved for an end user.

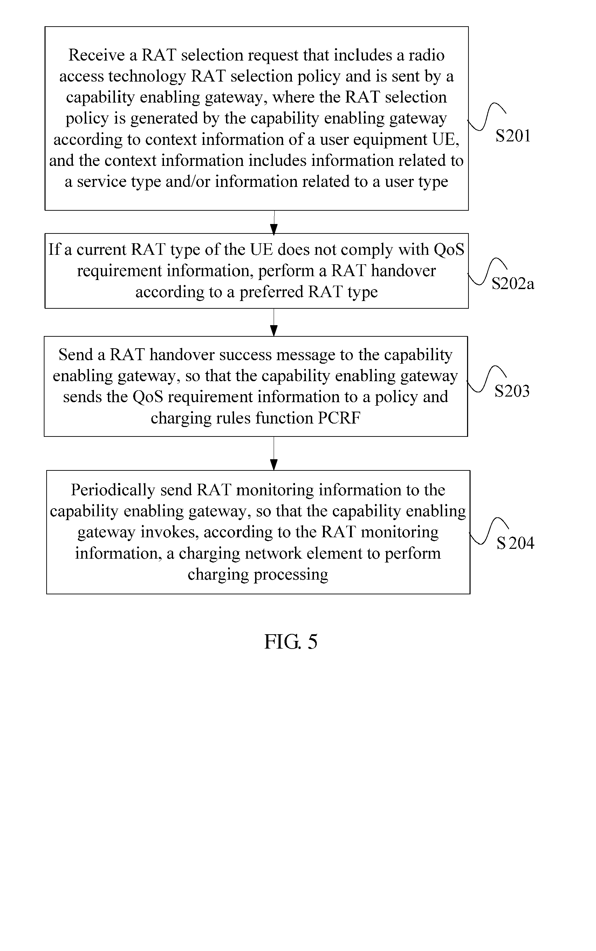

FIG. 5 is a flowchart of Embodiment 5 of an access processing method according to the present invention. This embodiment is based on the method shown in FIG. 4. As shown in FIG. 5, the method in this embodiment may include:

The RAT selection policy includes QoS requirement information, a temporary identifier of the UE, a current RAT type of the UE, and a preferred RAT type.

Step S202 is specifically as follows:

S202a. If the current RAT type of the UE does not comply with the QoS requirement information, perform a RAT handover according to the preferred RAT type.

Specifically, after the performing a RAT handover according to the preferred RAT type in S202a, the method further includes:

S203. Send a RAT handover success message to the capability enabling gateway, so that the capability enabling gateway sends the QoS requirement information to a policy and charging rules function PCRF.

Optionally, after the sending a RAT handover success message to the capability enabling gateway, the method further includes:

S204. Periodically send RAT monitoring information to the capability enabling gateway, so that the capability enabling gateway invokes, according to the RAT monitoring information, a charging network element to perform charging processing.

According to the access processing method provided in this embodiment, it is implemented that an inter-RAT coordination controller may schedule, under control of a capability enabling gateway and according to a service type corresponding to QoS requirement information, a UE to access a network of a corresponding standard. In this way, network utilization is improved, and service quality can be ensured and improved for an end user.

Based on the method shown in FIG. 4, in Embodiment 6 of an access processing method according to the present invention, the RAT selection policy includes a temporary identifier of the UE, a current RAT type of the UE, and a preferred RAT type.

Step S202 is specifically as follows:

If the current RAT type of the UE is not included in the preferred RAT type, perform a RAT handover according to the preferred RAT type.

According to the access processing method provided in this embodiment, it is implemented that an inter-RAT coordination controller may schedule, under control of a capability enabling gateway and according to an access standard adjustment policy defined by an operator, a UE to access a network of a corresponding standard. In this way, network utilization is improved, and service quality can be ensured and improved for an end user.

The following uses two specific embodiments to describe in detail the technical solutions of the method embodiments that are shown previously.

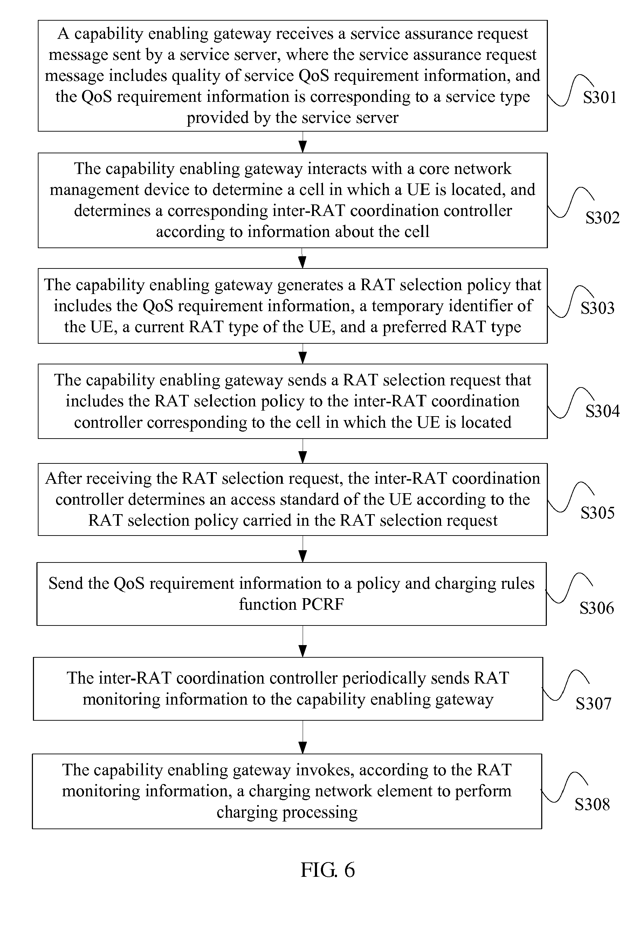

FIG. 6 is a flowchart of Embodiment 7 of an access processing method according to the present invention. As shown in FIG. 6, the method in this embodiment includes:

S301. A capability enabling gateway receives a service assurance request message sent by a service server, where the service assurance request message includes quality of service QoS requirement information, and the QoS requirement information is corresponding to a service type provided by the service server.

S302. The capability enabling gateway interacts with a core network management device to determine a cell in which a UE is located, and then determines a corresponding inter-RAT coordination controller according to information about the cell.

Specifically, the service server is, for example, an application and content server corresponding to an Internet content provider. After a user logs in to the application and content server by using a terminal and starts a specific service, if the application and content server finds, by using a login account of the user, that the user is, for example, a VIP user, a paid user, or a user of a specific service type, authentication and addressing (namely, finding a corresponding capability enabling gateway) are completed by using a capability enabling platform of an operator, and then a service assurance request message that includes quality of service QoS requirement information is sent to the capability enabling gateway, where the service assurance request message further includes an IP address of the user. If the IP address of the user is a private network IP address, the capability enabling gateway converts, by means of Network Address Translation (NAT), the private network IP address into an internal network IP address, and then sends the IP address of the user or the converted internal network IP address to a GGSN corresponding to the GSM and UMTS standards, or to an S-GW/P-GW. The corresponding GGSN/S-GW/P-GW returns context information of the user, where the context information of the user includes a card number (IMSI) of a SIM card, a mobile phone number (MSISDN), an identifier of an MME network element/SGSN network element, and a subscription type. Finally, the capability enabling gateway sends IMSI information of the user to the SGSN/MME; the SGSN/MME returns cell information and a temporary identifier of the UE that are corresponding to the IMSI; and the capability enabling gateway finds a corresponding inter-RAT coordination controller according to information about a cell with which the inter-RAT coordination controller is previously registered.

S303. The capability enabling gateway generates a RAT selection policy that includes the QoS requirement information, a temporary identifier of the UE, a current RAT type of the UE, and a preferred RAT type.

The current RAT type of the UE includes an identifier (ID) of a base station of a corresponding standard, for example, an eNode ID, a Cell ID, an RNC ID, and a RAI. The preferred RAT type may be a preferred RAT list.

S304. The capability enabling gateway sends a RAT selection request that includes the RAT selection policy to the inter-RAT coordination controller corresponding to the cell in which the UE is located.

S305. After receiving the RAT selection request, the inter-RAT coordination controller determines an access standard of the UE according to the RAT selection policy carried in the RAT selection request.

If the current RAT type of the UE does not comply with the QoS requirement information, a RAT handover is performed according to the preferred RAT type, which specifically includes:

The inter-RAT coordination controller assesses whether a current standard can comply with a QoS parameter in the QoS requirement information, and:
(1) if the requirement is met, retains the current access standard of the UE and returns a RAT identifier;
(2) if the requirement is not met, selects a RAT that meets the requirement, performs a RAT handover, and sends a RAT handover success message to the capability enabling gateway;
(3) if networks of all RAT standards do not meet the requirement, sends, to the capability enabling gateway, an identifier of a RAT that has the highest QoS capability among all the RAT standards, where the capability enabling gateway negotiates with the service server, and the service server determines whether to lower a Qos requirement, and whether to resend or stop sending the service assurance request message.

After (1) or (2), step S305 is performed.

S306. Send the QoS requirement information to a policy and charging rules function (Policy and Charging Rules Function, PCRF for short).

For the first case, the PCRF directly triggers an update of a bearer/the PDP; for the second case, the UE is handed over to a corresponding RAT, the Qos requirement information is acquired from the PCRF according to a 3GPP standard process, and the update of the bearer/PDP is performed.

S307. The inter-RAT coordination controller periodically sends RAT monitoring information to the capability enabling gateway.

S308. The capability enabling gateway invokes, according to the RAT monitoring information, a charging network element to perform charging processing.

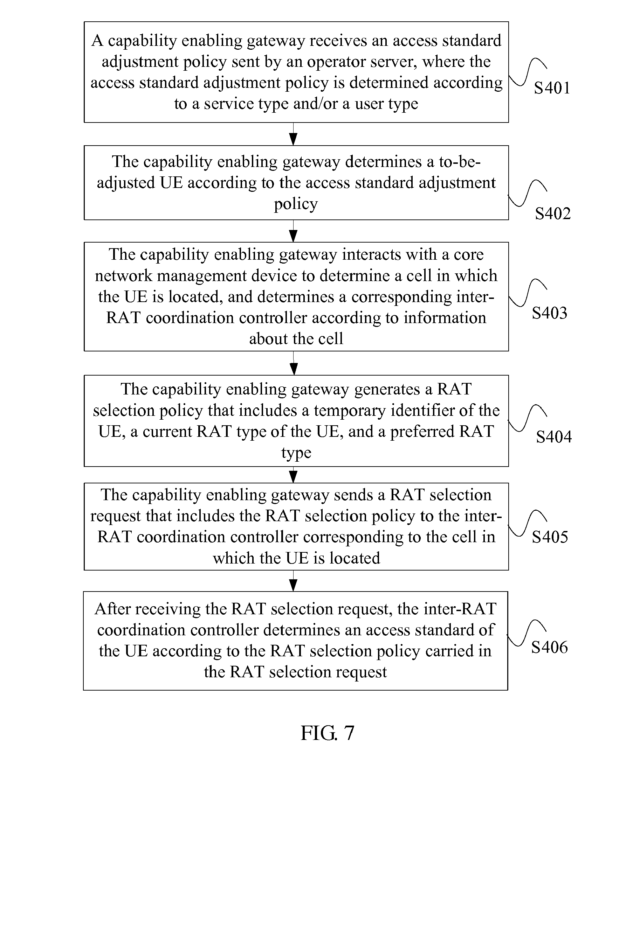

FIG. 7 is a flowchart of Embodiment 8 of an access processing method according to the present invention. As shown in FIG. 7, the method in this embodiment includes:

S401. A capability enabling gateway receives an access standard adjustment policy sent by an operator server, where the access standard adjustment policy is determined according to a service type and/or a user type.

The access standard adjustment policy may be a network selection policy defined by an operator, and the access standard adjustment policy is, for example, that a roaming user is carried on UMTS, a FUP user is carried on GSM, or a high-definition video service is carried on LTE.

S402. The capability enabling gateway determines a to-be-adjusted UE according to the access standard adjustment policy.

S403. The capability enabling gateway interacts with a core network management device to determine a cell in which the UE is located, and determines a corresponding inter-RAT coordination controller according to information about the cell.

Specifically, the capability enabling gateway interacts with a network element in the core network according to the access standard adjustment policy to determine the to-be-adjusted UE. For example:
(1) when the access standard adjustment policy is, for example, that a roaming user is carried on UMTS, the capability enabling gateway subscribes to roaming user information with an SGSN/MME, that is, when a roaming user uses a network, the SGSN/MME reports, to the capability enabling gateway, cell information corresponding to the user, and a temporary identifier of the UE;
(2) when the access standard adjustment policy is, for example, that a FUP user is carried on GSM, the capability enabling gateway subscribes to a FUP user with a PCRF, that is, when finding a condition of the FUP user is met, the PCRF reports IMSI information of the user to the capability enabling gateway, and the capability enabling gateway acquires cell information and a temporary identifier of the UE from the SGSN/MME;
(3) when the access standard adjustment policy is, for example, that a high-definition video service is carried on LTE, a GGSN/S-GW/P-GW actively reports a user type and a service type, and the capability enabling gateway matches the service type with the access standard adjustment policy, for example, the capability enabling gateway matches the high-definition video service with an LTE-preferred policy; and the capability enabling gateway acquires cell information and a temporary identifier of a UE from the SGSN/MME.

Finally, the capability enabling gateway determines the corresponding inter-RAT coordination controller according to the information about the cell.

S404. The capability enabling gateway generates a RAT selection policy that includes a temporary identifier of the UE, a current RAT type of the UE, and a preferred RAT type.

S405. The capability enabling gateway sends a RAT selection request that includes the RAT selection policy to the inter-RAT coordination controller corresponding to the cell in which the UE is located.

S406. After receiving the RAT selection request, the inter-RAT coordination controller determines an access standard of the UE according to the RAT selection policy carried in the RAT selection request.

Specifically, if the current RAT type of the UE is not included in the preferred RAT type, a RAT handover is performed according to the preferred RAT type.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

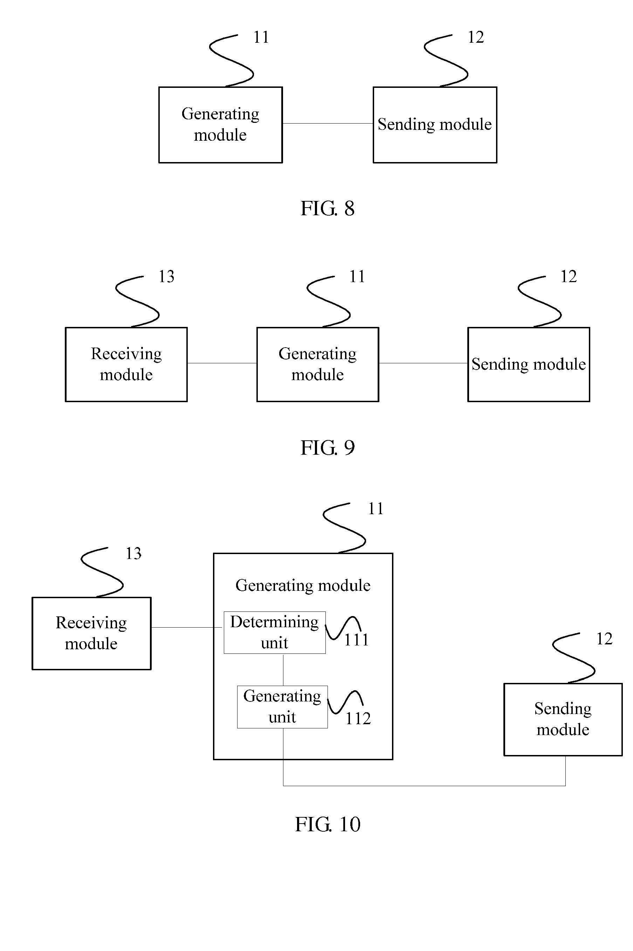

FIG. 8 is a schematic structural diagram of Embodiment 1 of a capability enabling gateway according to the present invention. As shown in FIG. 8, the capability enabling gateway in this embodiment may include a generating module 11 and a sending module 12.

The generating module 11 is configured to generate a radio access technology RAT selection policy according to context information of a user equipment UE, where the context information includes information related to a service type and/or information related to a user type.

The sending module 12 is configured to send a RAT selection request that includes the RAT selection policy generated by the generating module to an inter-RAT coordination controller corresponding to a cell in which the UE is located, so that the inter-RAT coordination controller determines an access standard of the UE according to the RAT selection policy.

The capability enabling gateway according to this embodiment may be used to implement the technical solutions of the method embodiment shown in FIG. 1; implementation principles thereof are similar and are not described herein again.

According to the capability enabling gateway provided in this embodiment, after a generating module generates a RAT selection policy according to context information of a UE, where the context information includes information related to a service type and/or information related to a user type, a sending module sends a RAT selection request that includes the RAT selection policy to an inter-RAT coordination controller corresponding to a cell in which the UE is located, so that the inter-RAT coordination controller determines an access standard of the UE according to the RAT selection policy. It is implemented that the capability enabling gateway may control the inter-RAT coordination controller corresponding to the cell in which the UE is located to schedule, according to the service type and/or the user type, the UE to access a network of the corresponding standard. In this way, network utilization is improved, and service quality can be ensured and improved for an end user.

FIG. 9 is a schematic structural diagram of Embodiment 2 of a capability enabling gateway according to the present invention. As shown in FIG. 9, based on the apparatus structure shown in FIG. 8, the apparatus in this embodiment further includes a receiving module 13, where the receiving module 13 is configured to: before the generating module generates the RAT selection policy according to the context information of the UE, receive a service assurance request message sent by a service server, where the service assurance request message includes quality of service QoS requirement information, and the QoS requirement information is corresponding to a service type provided by the service server. The generating module 11 is specifically configured to generate a RAT selection policy that includes the QoS requirement information, a temporary identifier of the UE, a current RAT type of the UE, and a preferred RAT type.

Further, the receiving module 13 is further configured to receive a RAT handover success message sent by the inter-RAT coordination controller after the sending module sends the RAT selection request that includes the RAT selection policy to the inter-RAT coordination controller corresponding to the cell in which the UE is located.

The sending module 12 is further configured to send the QoS requirement information to a policy and charging rules function PCRF.

Further, the receiving module 13 is further configured to: after the sending module sends the QoS requirement information to the PCRF, receive RAT monitoring information periodically sent by the inter-RAT coordination controller and invoke, according to the RAT monitoring information, a charging network element to perform charging processing.

The apparatus according to this embodiment may be used to implement the technical solutions of the method embodiment shown in FIG. 2; implementation principles thereof are similar and are not described herein again.

According to the capability enabling gateway provided in this embodiment, a receiving module receives a service assurance request message sent by a service server, where the service assurance request message includes quality of service QoS requirement information, and the QoS requirement information is corresponding to a service type provided by the service server; and after a generating module generates a RAT selection policy according to context information of a UE, where the RAT selection policy includes the QoS requirement information, a temporary identifier of the UE, a current RAT type of the UE, and a preferred RAT type, a sending module sends a RAT selection request that includes the RAT selection policy to an inter-RAT coordination controller corresponding to a cell in which the UE is located, so that the inter-RAT coordination controller determines an access standard of the UE according to the RAT selection policy. The capability enabling gateway may control the inter-RAT coordination controller corresponding to the cell in which the UE is located to schedule, according to the service type corresponding to the QoS requirement information, the UE to access a network of the corresponding standard. In this way, network utilization is improved, and service quality can be ensured and improved for an end user.

FIG. 10 is a schematic structural diagram of Embodiment 3 of a capability enabling gateway according to the present invention. An apparatus in this embodiment is based on the apparatus structure shown in FIG. 9. As shown in FIG. 10, the generating module 11 includes a determining unit 111 and a generating unit 112, where the receiving module 13 is configured to: before the generating module generates the RAT selection policy according to the context information of the UE, receive an access standard adjustment policy sent by an operator server, where the access standard adjustment policy is determined according to the service type and/or the user type.

The determining unit 111 is configured to determine a to-be-adjusted UE according to the access standard adjustment policy.

The generating unit 112 is configured to generate the RAT selection policy that includes the temporary identifier of the UE, the current RAT type of the UE, and the preferred RAT type.

Further, the determining unit 111 is specifically configured to:
interact with a network element in a core network according to the access standard adjustment policy to determine the to-be-adjusted UE.

The apparatus according to this embodiment may be used to implement the technical solutions of the method embodiment shown in FIG. 3; implementation principles thereof are similar and are not described herein again.

According to the capability enabling gateway provided in this embodiment, a receiving module receives an access standard adjustment policy sent by an operator server, where the access standard adjustment policy is determined according to a service type and/or a user type; a determining unit determines a to-be-adjusted UE according to the access standard adjustment policy; a generating unit generates a RAT selection policy that includes a temporary identifier of the UE, a current RAT type of the UE, and a preferred RAT type; and a sending module sends a RAT selection request that includes the RAT selection policy to an inter-RAT coordination controller corresponding to a cell in which the UE is located, so that the inter-RAT coordination controller determines an access standard of the UE according to the RAT selection policy. The capability enabling gateway may control the inter-RAT coordination controller corresponding to the cell in which the UE is located to schedule, according to the access standard adjustment policy defined by an operator, the UE to access a network of the corresponding standard. In this way, network utilization is improved, and service quality can be ensured and improved for an end user.

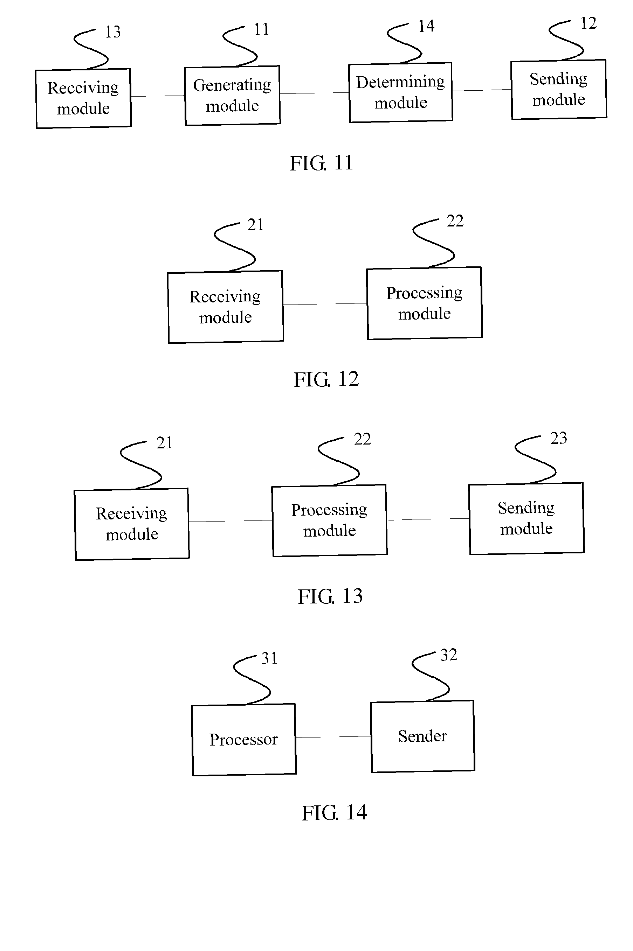

FIG. 11 is a schematic structural diagram of Embodiment 4 of a capability enabling gateway according to the present invention. As shown in FIG. 11, based on the capability enabling gateway structures shown in the foregoing FIG. 8 to FIG. 10, an apparatus in this embodiment further includes a determining module 14, where the determining module 14 is configured to: before the generating module generates the RAT selection policy according to the context information of the UE, interact with a core network management device to determine the cell in which the UE is located, and determine the corresponding inter-RAT coordination controller according to information about the cell.

FIG. 12 is a schematic structural diagram of Embodiment 1 of an inter-RAT coordination controller according to the present invention. As shown in FIG. 12, an apparatus in this embodiment may include a receiving module 21 and a processing module 22.

The receiving module 21 is configured to receive a RAT selection request that includes a radio access technology RAT selection policy and is sent by a capability enabling gateway, where the RAT selection policy is generated by the capability enabling gateway according to context information of a user equipment UE, and the context information includes information related to a service type and/or information related to a user type.

The processing module 22 is configured to determine an access standard of the user equipment UE according to the RAT selection policy received by the receiving module.

The apparatus according to this embodiment may be used to implement the technical solutions of the method embodiment shown in FIG. 4; implementation principles thereof are similar and are not described herein again.

According to the inter-RAT coordination controller provided in this embodiment, a receiving module receives a RAT selection request that includes a radio access technology RAT selection policy and is sent by a capability enabling gateway, where the RAT selection policy is generated by the capability enabling gateway according to context information of a user equipment UE, and the context information includes information related to a service type and/or information related to a user type; and then a processing module determines an access standard of the UE according to the RAT selection policy. It is implemented that the inter-RAT coordination controller may schedule, under control of the capability enabling gateway and according to the service type and/or the user type, the UE to access a network of the corresponding standard. In this way, network utilization is improved, and service quality can be ensured and improved for an end user.

Optionally, the RAT selection policy includes QoS requirement information, a temporary identifier of the UE, a current RAT type of the UE, and a preferred RAT type.

The processing module 22 is specifically configured to: if the current RAT type does not comply with the QoS requirement information in the RAT selection policy, perform a RAT handover according to the preferred RAT type.

FIG. 13 is a schematic structural diagram of Embodiment 2 of an inter-RAT coordination controller according to the present invention. Based on the apparatus structure shown in FIG. 12, an apparatus in this embodiment, as shown in FIG. 13, further includes a sending module 23, where the sending module 23 is configured to: after the processing module 22 performs the RAT handover according to the preferred RAT type, send a RAT handover success message to the capability enabling gateway, so that the capability enabling gateway sends the QoS requirement information to a policy and charging rules function PCRF.

Further, the sending module 23 is further configured to: after the sending the RAT handover success message to the capability enabling gateway, periodically send RAT monitoring information to the capability enabling gateway, so that the capability enabling gateway invokes, according to the RAT monitoring information, a charging network element to perform charging processing.

The apparatus according to this embodiment may be used to implement the technical solutions of the method embodiment shown in FIG. 5; implementation principles thereof are similar and are not described herein again.

According to the inter-RAT coordination controller provided in this embodiment, it is implemented that the inter-RAT coordination controller may schedule, under control of a capability enabling gateway and according to a service type corresponding to QoS requirement information, a UE to access a network of a corresponding standard. In this way, network utilization is improved, and service quality can be ensured and improved for an end user.

Optionally, the RAT selection policy includes the temporary identifier of the UE, the current RAT type of the UE, and the preferred RAT type; and the processing module 22 is specifically configured to:
if the current RAT type of the UE is not included in the preferred RAT type, perform a RAT handover according to the preferred RAT type.

The apparatus according to this embodiment may be used to implement the technical solutions of the method embodiment shown in Embodiment 6; implementation principles thereof are similar and are not described herein again.

According to the inter-RAT coordination controller provided in this embodiment, it is implemented that the inter-RAT coordination controller may schedule, under control of a capability enabling gateway and according to an access standard adjustment policy defined by an operator, a UE to access a network of a corresponding standard. In this way, network utilization is improved, and service quality can be ensured and improved for an end user.

A communications system in an embodiment of present invention includes the capability enabling gateway shown in any one of FIG. 8 to FIG. 11, and at least one inter-RAT coordination controller shown in one of FIG. 12 and FIG. 13.

FIG. 14 is a schematic structural diagram of Embodiment 5 of a capability enabling gateway according to the present invention. As shown in FIG. 14, the capability enabling gateway in this embodiment may include a processor 31 and a sender 32.

The processor 31 is configured to generate a radio access technology RAT selection policy according to context information of a user equipment UE, where the context information includes information related to a service type and/or information related to a user type.

The sender 32 is configured to send a RAT selection request that includes the RAT selection policy generated by the processor 31 to an inter-RAT coordination controller corresponding to a cell in which the UE is located, so that the inter-RAT coordination controller determines an access standard of the UE according to the RAT selection policy.

The capability enabling gateway according to this embodiment may be used to implement the technical solutions of the method embodiment shown in FIG. 1; implementation principles thereof are similar and are not described herein again.

According to the capability enabling gateway provided in this embodiment, after a processor generates a RAT selection policy according to context information of a UE, where the context information includes information related to a service type and/or information related to a user type, a sender sends a RAT selection request that includes the RAT selection policy to an inter-RAT coordination controller corresponding to a cell in which the UE is located, so that the inter-RAT coordination controller determines an access standard of the UE according to the RAT selection policy. It is implemented that the capability enabling gateway may control the inter-RAT coordination controller corresponding to the cell in which the UE is located to schedule, according to the service type and/or the user type, the UE to access a network of the corresponding standard. In this way, network utilization is improved, and service quality can be ensured and improved for an end user.

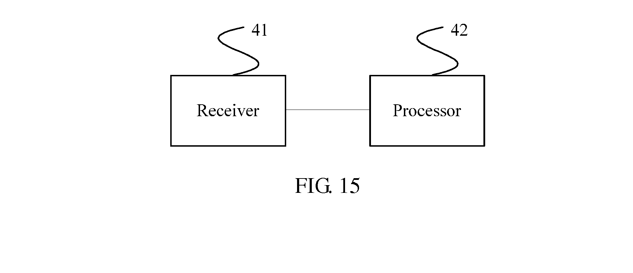

FIG. 15 is a schematic structural diagram of Embodiment 3 of an inter-RAT coordination controller according to the present invention. As shown in FIG. 15, the capability enabling gateway in this embodiment may include a receiver 41 and a processor 42.

The receiver 41 is configured to receive a RAT selection request that includes a radio access technology RAT selection policy and is sent by a capability enabling gateway, where the RAT selection policy is generated by the capability enabling gateway according to context information of a user equipment UE, and the context information includes information related to a service type and/or information related to a user type.

The processor 42 is configured to determine an access standard of the user equipment UE according to the RAT selection policy received by the receiver 41.

The apparatus according to this embodiment may be used to implement the technical solutions of the method embodiment shown in FIG. 4; implementation principles thereof are similar and are not described herein again.

According to the inter-RAT coordination controller provided in this embodiment, a receiver receives a RAT selection request that includes a radio access technology RAT selection policy and is sent by a capability enabling gateway, where the RAT selection policy is generated by the capability enabling gateway according to context information of a user equipment UE, and the context information includes information related to a service type and/or information related to a user type; and then a processor determines an access standard of the UE according to the RAT selection policy. It is implemented that the inter-RAT coordination controller may schedule, under control of the capability enabling gateway and according to the service type and/or the user type, the UE to access a network of the corresponding standard. In this way, network utilization is improved, and service quality can be ensured and improved for an end user.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. An access processing method, comprising:
generating a radio access technology RAT selection policy according to context information of a user equipment UE, wherein the context information comprises information related to a service type and/or information related to a user type; and
sending a RAT selection request that comprises the RAT selection policy to an inter-RAT coordination controller corresponding to a cell in which the UE is located, so that the inter-RAT coordination controller determines an access standard of the UE according to the RAT selection policy.

2. The method according to claim 1, before the generating a RAT selection policy according to context information of a UE, further comprising:
receiving a service assurance request message sent by a service server, wherein the service assurance request message comprises quality of service QoS requirement information, and the QoS requirement information is corresponding to a service type provided by the service server, wherein
the generating a RAT selection policy according to context information of a UE comprises:
generating a RAT selection policy that comprises the QoS requirement information, a temporary identifier of the UE, a current RAT type of the UE, and a preferred RAT type.

3. The method according to claim 2, after the sending a RAT selection request that comprises the RAT selection policy to an inter-RAT coordination controller corresponding to a cell in which the UE is located, further comprising:
receiving a RAT handover success message sent by the inter-RAT coordination controller; and
sending the QoS requirement information to a policy and charging rules function PCRF.

4. The method according to claim 3, after the sending the QoS requirement information to the PCRF, further comprising:
receiving RAT monitoring information periodically sent by the inter-RAT coordination controller, and invoking, according to the RAT monitoring information, a charging network element to perform charging processing.

5. The method according to claim 1, before the generating a RAT selection policy according to context information of a UE, further comprising:
receiving an access standard adjustment policy sent by an operator server, wherein the access standard adjustment policy is determined according to the service type and/or the user type, wherein
the generating a RAT selection policy according to context information of a UE comprises:
determining a to-be-adjusted UE according to the access standard adjustment policy; and
generating a RAT selection policy that comprises a temporary identifier of the UE, a current RAT type of the UE, and a preferred RAT type.

6. The method according to claim 5, wherein the determining a to-be-adjusted UE according to the access standard adjustment policy comprises:
interacting with a network element in a core network according to the access standard adjustment policy to determine the to-be-adjusted UE.

7. The method according to any one of claims 1 to 6, before the generating a RAT selection policy according to context information of a UE, further comprising:
interacting with a core network management device to determine the cell in which the UE is located; and
determining the corresponding inter-RAT coordination controller according to information about the cell.

8. An access processing method, comprising:
receiving a RAT selection request that comprises a radio access technology RAT selection policy and is sent by a capability enabling gateway, wherein the RAT selection policy is generated by the capability enabling gateway according to context information of a user equipment UE, and the context information comprises information related to a service type and/or information related to a user type; and
determining an access standard of the user equipment UE according to the RAT selection policy.

9. The method according to claim 8, wherein the RAT selection policy comprises QoS requirement information, a temporary identifier of the UE, a current RAT type of the UE, and a preferred RAT type; and
the determining an access standard of the user equipment UE according to the RAT selection policy comprises:
if the current RAT type of the UE does not comply with the QoS requirement information, performing a RAT handover according to the preferred RAT type.

10. The method according to claim 9, after the performing a RAT handover according to the preferred RAT type, further comprising:
sending a RAT handover success message to the capability enabling gateway, so that the capability enabling gateway sends the QoS requirement information to a policy and charging rules function PCRF.

11. The method according to claim 10, after the sending a RAT handover success message to the capability enabling gateway, further comprising:
periodically sending RAT monitoring information to the capability enabling gateway, so that the capability enabling gateway invokes, according to the RAT monitoring information, a charging network element to perform charging processing.

12. The method according to claim 8, wherein the RAT selection policy comprises a temporary identifier of the UE, a current RAT type of the UE, and a preferred RAT type; and
the determining an access standard of the user equipment UE according to the RAT selection policy comprises:
if the current RAT type of the UE is not comprised in the preferred RAT type, performing a RAT handover according to the preferred RAT type.

13. A capability enabling gateway, comprising:
a generating module, configured to generate a radio access technology RAT selection policy according to context information of a user equipment UE, wherein the context information comprises information related to a service type and/or information related to a user type; and
a sending module, configured to send a RAT selection request that comprises the RAT selection policy generated by the generating module to an inter-RAT coordination controller corresponding to a cell in which the UE is located, so that the inter-RAT coordination controller determines an access standard of the UE according to the RAT selection policy.

14. The capability enabling gateway according to claim 13, further comprising:
a receiving module, configured to: before the generating module generates the RAT selection policy according to the context information of the UE, receive a service assurance request message sent by a service server, wherein the service assurance request message comprises quality of service QoS requirement information, and the QoS requirement information is corresponding to a service type provided by the service server, wherein
the generating module is specifically configured to generate a RAT selection policy that comprises the QoS requirement information, a temporary identifier of the UE, a current RAT type of the UE, and a preferred RAT type.

15. The capability enabling gateway according to claim 14, wherein the receiving module is further configured to:
receive a RAT handover success message sent by the inter-RAT coordination controller after the sending module sends the RAT selection request that comprises the RAT selection policy to the inter-RAT coordination controller corresponding to the cell in which the UE is located, wherein
the sending module is further configured to send the QoS requirement information to a policy and charging rules function PCRF.

16. The capability enabling gateway according to claim 15, wherein the receiving module is further configured to:
after the sending module sends the QoS requirement information to the PCRF, receive RAT monitoring information periodically sent by the inter-RAT coordination controller and invoke, according to the RAT monitoring information, a charging network element to perform charging processing.

17. The capability enabling gateway according to claim 13, wherein the receiving module is configured to: before the generating module generates the RAT selection policy according to the context information of the UE, receive an access standard adjustment policy sent by an operator server, wherein the access standard adjustment policy is determined according to the service type and/or the user type; and
the generating module comprises:
a determining unit, configured to determine a to-be-adjusted UE according to the access standard adjustment policy; and
a generating unit, configured to generate a RAT selection policy that comprises a temporary identifier of the UE, a current RAT type of the UE, and a preferred RAT type.

18. The capability enabling gateway according to claim 17, wherein the determining unit is specifically configured to:
interact with a network element in a core network according to the access standard adjustment policy to determine the to-be-adjusted UE.

19. The capability enabling gateway according to any one of claims 13 to 18, further comprising:
a determining module, configured to: before the generating module generates the RAT selection policy according to the context information of the UE, interact with a core network management device to determine the cell in which the UE is located; and
determine the corresponding inter-RAT coordination controller according to information about the cell.

20. An inter-RAT coordination controller, comprising:
a receiving module, configured to receive a RAT selection request that comprises a radio access technology RAT selection policy and is sent by a capability enabling gateway, wherein the RAT selection policy is generated by the capability enabling gateway according to context information of a user equipment UE, and the context information comprises information related to a service type and/or information related to a user type; and
a processing module, configured to determine an access standard of the user equipment UE according to the RAT selection policy received by the receiving module.

21. The inter-RAT coordination controller according to claim 20, wherein the RAT selection policy comprises QoS requirement information, a temporary identifier of the UE, a current RAT type of the UE, and a preferred RAT type; and
the processing module is specifically configured to:
if the current RAT type of the UE does not comply with the QoS requirement information, perform a RAT handover according to the preferred RAT type.

22. The inter-RAT coordination controller according to claim 21, further comprising:
a sending module, configured to: after the processing module performs the RAT handover according to the preferred RAT type, send a RAT handover success message to the capability enabling gateway, so that the capability enabling gateway sends the QoS requirement information to a policy and charging rules function PCRF.

23. The inter-RAT coordination controller according to claim 22, wherein the sending module is further configured to:
after the sending the RAT handover success message to the capability enabling gateway, periodically send RAT monitoring information to the capability enabling gateway, so that the capability enabling gateway invokes, according to the RAT monitoring information, a charging network element to perform charging processing.

24. The inter-RAT coordination controller according to claim 20, wherein the RAT selection policy comprises a temporary identifier of the UE, a current RAT type of the UE, and a preferred RAT type; and
the processing module is specifically configured to:
if the current RAT type of the UE is not comprised in the preferred RAT type, perform a RAT handover according to the preferred RAT type.

25. A communications system, comprising the capability enabling gateway according to any one of claims 13 to 19, and at least one inter-RAT coordination controller according to any one of claims 20 to 24.

26. A capability enabling gateway, comprising:
a processor, configured to generate a radio access technology RAT selection policy according to context information of a user equipment UE, wherein the context information comprises information related to a service type and/or information related to a user type; and
a sender, configured to send a RAT selection request that comprises the RAT selection policy generated by the processor to an inter-RAT coordination controller corresponding to a cell in which the UE is located, so that the inter-RAT coordination controller determines an access standard of the UE according to the RAT selection policy.

27. An inter-RAT coordination controller, comprising:
a receiver, configured to receive a RAT selection request that comprises a radio access technology RAT selection policy and is sent by a capability enabling gateway, wherein the RAT selection policy is generated by the capability enabling gateway according to context information of a user equipment UE, and the context information comprises information related to a service type and/or information related to a user type; and
a processor, configured to determine an access standard of the user equipment UE according to the RAT selection policy received by the receiver.

28. A communications system, comprising the capability enabling gateway according to claim 26, and the inter-RAT coordination controller according to claim 27.
